# EUROPÄISCHE PATENTANMELDUNG

(11) **EP 0 656 384 A2**
(43) Veröffentlichungstag der Anmeldung: **07.06.1995**
(21) Anmeldenummer: 94116608.4
(22) Anmeldetag: 21.10.1994
(51) Int. Cl.: C08G 59/56, C08F 283/10, C09D 11/10

(54) **Polymersysteme, Verfahren zu ihrer Herstellung und ihre Verwendung für Druckfarben**

(30) Priorität: 02.11.1993 DE 4337253; 30.06.1994 DE 4422869
(71) Anmelder: HOECHST AKTIENGESELLSCHAFT, D-65926 Frankfurt am Main (DE)
(72) Erfinder: Giencke, Astrid, Dr., D-65719 Hofheim (DE); Mergardt, Bernd, Dr., D-65347 Entville (DE); Neumann, Uwe, Dr., D-65307 Bad Schwalbach (DE); Walz, Gerd, Dr., D-65207 Wiesbaden (DE)

(57) **Zusammenfassung**

Aminogruppen-haltige Polymersysteme, die sich zur Herstellung von Bindemitteln für Druckfarben eignen, können erhalten werden durch Aufbau eines Polymers oder Polymergemisches A aus mindestens jeweils einer Verbindung aus den Gruppen
(a) Epoxide, Carbonate, Epoxid-Carbonate,
(b) Amine und
(c) Phenole
und zumindest Teilneutralisation des erhaltenen Polymers oder Polymergemisches A und Überführung in Wasser, und gegebenfalls Herstellung eines wasserunlöslichen Polymers B, herstellbar durch Polymerisation von ethylenisch ungesättigten Monomeren in Gegenwart des Polymers oder Polymergemisches A.

## Beschreibung

Die vorliegende Erfindung betrifft kationische Polymersyteme, Verfahren zu deren Herstellung sowie deren Verwendung als Bestandteile von Bindemitteln für Druckfarben.

Unter dem Begriff Druckfarbe werden im folgenden sowohl verdruckbare Körper mit tatsächlicher Farbwirkung als auch nicht farbgebende Druckfarbenverschnitte und verdruckbare nichtfarbige Klarlacke verstanden, die mit Wasser verdünnbar sein können.

Zur Verbesserung der Emissionssituation bei der Applikation von Druckfarben werden organische Lösungsmitteln zunehmend durch Wasser ersetzt. Es ist allgemein bekannt, daß als grundlegende Bestandteile wäßriger Druckfarben Harze mit sauren oder basischen Gruppen eingesetzt werden. Diese Harze sind ganz oder teilweise neutralisiert, um sie wasserlöslich oder wasserdispergierbar zu machen. In wäßriger Phase besitzen die Harze ein hohes Aufnahmevermögen für Pigmente und/oder Füllstoffe und sind auch als polymere Emulgatoren in Emulsionspolymerisationsverfahren zur Erzeugung von Dispersionen einsetzbar. Weiterhin sind in Druckfarben zur Optimierung der drucktechnischen Eigenschaften beispielsweise Pigmente, Latexteilchen, Füllmaterialien, Wachse, Entschäumer, Filmkonsolidierungsmitteln und häufig auch organische Lösungsmittel enthalten.

Bei der Herstellung von pigmentierten Druckfarben werden Pigmente in einem Teil des zur Verwendung gelangenden Bindemittels oder in speziellen Bindemitteln, den Pastenharzen oder Reibharzen, vermahlen. Die so erzeugten Stammfarben oder Mahlpasten liefern dann Druckfarben, indem sie mit restlichem Bindemittel zu einem Lack "aufgelackt" werden. Die für derartige Stammfarben eingesetzte Reibharze müssen eine Reihe von Eigenschaften erfüllen. Eine wichtige Eigenschaft ist das gute Benetzungsvermögen für die jeweiligen Pigmente. Daneben müssen sie mit dem Hauptbindemittel gut verträglich sein und dürfen in der erforderlichen Menge die Eigenschaften des Hauptbindemittels nicht wesentlich verändern. Überdies sollten die Reibharze in wäßriger Phase eine niedrige Viskosität aufweisen. Weiterhin sollen auch pigmentierte Stammfarben mit einem Pigment/Bindemittelverhältnis (PBV) von > 0,5 : 2, vorzugsweise mindestens 1:2 lagerstabil sein, so daß die Pigmente nicht sedimentieren oder Agglomerate bilden. Auch sollen die Pasten nicht eindicken, beispielsweise durch Aufbau von Strukturviskosität oder Thixotropie, da sie für den Einsatz in der Praxis über einen längeren Zeitraum hinweg pump- und fließfähig bleiben müssen. Weiterhin ist es vorteilhaft, als Anreibharze Bindemittel einzusetzen, die unter den für Druckverfahren üblichen Bedingungen verdruckbar sind und die auch eine akzeptable Wiedergewinnungsqualität der Zellstoffe beim Deinken bieten.

Dazu sind kationisch aufgebaute Bindemittel bevorzugt einzusetzen. So beschreibt DE-A 41 15 731 Wasserfarbkompositionen, die durch anteilige Verwendung von kationischen Harzen bevorzugte Deinkbarkeit aufweisen sollen. Als kationische Harze sind handelsübliche Acrylharze beschrieben.

Kationische Polymersysteme sind seit vielen Jahren bekannt und werden insbesondere für Elektrolackierungen eingesetzt. Derartige Harze werden beispielsweise erzeugt durch Umsetzungen von Bisphenolen mit Epichlorhydrin (1-Stufenprozeß zu Taffy-Harzen) oder auch mit Bis-Epoxiden (Advancement-Reaktionen) und weiterer Umsetzung mit Aminen zu Polymeren mit β-Hydroxyamin-Strukturen, die nach Neutralisation mit Säuren kationische Ladungen tragen (Houben-Weyl, Methoden der Organischen Chemie, 4.Aufl., Bd. E20, S.1891ff., Georg Thieme Verlag, Stuttgart 1987). Diese Harze sind jedoch nicht brauchbar als Bindemittel für Druckfarben aufgrund der enthaltenen reaktiven Epoxide, die nach Folgereaktionen mit den Papierfasern eine Trennung von Druckfarbe und Papier verhindern. Weiterhin zeigen derartige Harze, bedingt durch Polymergröße und Gehalt an flexibilisierenden Teilstrukturen, zu niedrige Glasübergangstemperaturen, so daß sie als schnelltrocknende Bindemittel für block- und klebfreie Druckfarben nicht einsetzbar sind.

Nach Protonierung mit Säure wasserverdünnbare Bindemittel sind Gegenstand von EP-A 0 272 427. Die dort beschriebenen Umsetzungsprodukte von Epoxiden, Aminen und Butadien-/Acrylnitril-Copolymeren werden als vernetzungsaktive Komponenten für die kathodische Elektrotauchlackierung eingesetzt. Sie sind jedoch aufgrund ihrer niedrigen Glasübergangstemperatur für Drucksysteme nicht brauchbar.

In Gegenwart von Säure wasserverdünnbare Bindemittel sind auch Gegenstand von WO 91/09917. Diese Systeme sind jedoch für den Einsatz als Bindemittelgrundlage in wäßrigen Druckfarben nicht geeignet, da die Harze hohe Massenanteile an flexibilisierenden Polyetherfunktionen enthalten.

In DE-A 31 23 536 werden Bindemittel für kathodisch abscheidbare Überzugsmassen vorgestellt, die ein kationisches Kunstharz in wäßriger Phase enthalten. Die beschriebenen Bindemittel sind jedoch für eine Anwendung im Drucksektor ungeeignet, da die kationischen Harze erst nach dem Einbrennen mit Vernetzerkomponenten klebfreie Überzüge liefern.

Kationische Druckfarben, aufgebaut unter Zusatz von Epoxid-freien Bindemitteln auf Basis von Harzen mit β-Hydroxyamin-Strukturen in der Hauptkette sind aus P 43 14 298.2 bekannt. Ein wesentlicher Nachteil der dort beschriebenen Polymerharze ist ihr unzureichender Einfluß auf Wasserfestigkeit und Trocknungsgeschwindigkeit der Druckfarbfilme, die es zu verbessern gilt.

Der Erfindung lag demnach die Aufgabe zugrunde, Aminogruppen-haltige Polymersysteme zur Verfügung zu stellen, die die genannten Nachteile des Standes der Technik nicht haben und als polymere Bindemittelbestandteile in Druckfarben einsetzbar sind.

Die Aufgabe wird erfindungsgemäß gelöst durch ein Aminogruppen-haltiges Polymersystem aus einem Polymer oder Polymergemisch A, das durch Umsetzung von
(a) Epoxiden, Carbonaten oder Epoxid-Carbonaten,
(b) Aminen und
(c) Phenolen
hergestellt werden kann, und gegebenenfalls einem wasserunlöslichen Polymer B, das in Gegenwart des zumindest teilneutralisierten Polymers oder Polymergemisches A aus ethylenisch ungesättigten Verbindungen polymerisiert werden kann.

Gegenstand der Erfindung ist also ein Aminogruppen-haltiges Polymersystem, enthaltend ein Aminogruppen-haltiges Polymer oder Polymergemisch A mit einer Glasübergangstemperatur von mindestens 40 °C, einem mittleren Molekulargewicht (Gewichtsmittel) von 2000-75000 und einer Aminzahl von 50-300, dessen Aminogruppen mindestens zu 35 % neutralisiert sind, herstellbar durch Umsetzung von mindestens jeweils einer Verbindung aus den Gruppen
(a) Epoxide, Carbonate, Epoxid-Carbonate,
(b) Amine und
(c) Phenole
und zumindest Teilneutralisation des erhaltenen Polymers oder Polymergemisches A und Überführung in Wasser, und gegebenfalls ein wasserunlösliches Polymer B, herstellbar durch Polymerisation von ethylenisch ungesättigten Monomeren in Gegenwart des Polymers oder Polymergemisches A.

Die Aminogruppen-haltigen Polymere oder Polymergemische A weisen vorzugsweise eine Glasübergangstemperatur von mindestens 50 °C, insbesondere von mindestens 70 °C, auf.

Vorzugsweise besitzen die Aminogruppen-haltigen Polymere oder Polymergemische ein mittleres Molekulargewicht (Gewichtsmittel) von 3000 bis 60000, insbesondere von 4000 bis 40000, besonders bevorzugt von 5000 bis 25000.

Die Aminzahl des Polymers oder Polymergemisches A liegt vorzugsweise bei 80-250, insbesondere 90-180.

Die Aminogruppen im Polymer oder Polymergemisch A sind vorzugsweise zu mindestens 50 %, insbesondere zu mindestens 65%, besonders bevorzugt zu mindestens 80 %, neutralisiert.

Eine besondere Ausführungsform der Erfindung betrifft Polymermischungen A, die mindestens zwei unterschiedliche Aminogruppen-haltige Polymere A1 und A2 enthalten.

In dieser besonderen Ausführungsform weisen die in den erfindungsgemäßen Polymermischungen A enthaltenen Aminogruppen-haltigen Polymere vorzugsweise ein unterschiedliches mittleres Molekulargewicht auf. Das mittlere Molekulargewicht des Aminogruppen-haltigen Polymers A1 liegt dabei vorzugsweise im Bereich von 500 bis 5000, insbesondere von 1000 bis 4000, das mittlere Molekulargewicht des Aminogruppen-haltigen Polymers B vorzugsweise im Bereich zwischen 5000 und 20 000, insbesondere zwischen 6000 und 10 000. Die erfindungsgemäßen A Polymermischungen enthalten die Aminogruppen-haltigen Polymere A1 und A2 in einem Gewichtsverhältnis von 95 : 5 bis 5 : 95, vorzugsweise 85 : 15 bis 15 : 85, insbesondere von 75 : 25 bis 25 : 75.

Beispiele für die erfindungsgemäßen Epoxid-Aminaddukte sind Umsetzungsprodukte von Epoxidgruppen-haltigen Harzen (a1) mit vorzugsweise endständigen Epoxidgruppen und/oder Carbonatgruppen-haltigen Harzen (a2) mit vorzugsweise endständigen Carbonatgruppen aus den Gruppen Polyglycidylether, Polyglycidylester und Polyglycidylamine mit gegebenfalls mehrwertigen Phenolen (c) und/oder Alkoholen und mit gesättigten und/oder ungesättigten sekundären und/oder primären Aminen (b) oder Aminoalkoholen. Letztere können am Alkylrest durch mindestens eine primäre und/oder sekundäre Hydroxylgruppe, durch eine Dialkylaminogruppe und/oder durch eine primäre Aminogruppe, die durch Ketiminbildung vorübergehend geschützt wird, modifiziert sein.

Gegenstand der Erfindung ist auch Verfahren zur Herstellung eines Polymersystems nach Anspruch 1 durch Aufbau eines Aminogruppen-haltigen Polymers oder Polymergemisches A in Masse oder in Gegenwart eines organischen Lösungsmittels aus mindestens jeweils einer Verbindung aus den Gruppen
(a) Epoxide, Carbonate oder Epoxid-Carbonate,
(b) Amine und
(c) Phenole,
Neutralisation des erhaltenen Polymers oder Polymergemisches A zu mindestens 35 % und Überführung in Wasser und gegebenenfalls Herstellung eines wasserunlöslichen Polymers B in Gegenwart des Polymers oder Polymergemisches A in wäßriger Phase durch Emulsions- oder Suspensionspolymerisation.

Eine besondere Verfahrensvariante ist dadurch gekennzeichnet, daß zunächst ein Polymergemisch A durch Herstellung mindestens eines Aminogruppenhaltigen Polymers A2 in Gegenwart mindestens eines Aminogruppen-haltigen Polymers A1 hergestellt wird.

Die Herstellung der erfindungsgemäßen Polymere oder Polymergemische A kann in der Weise erfolgen, daß eine Mischung aus Phenolen (c1), die zumindest eine phenolische Hydroxylgruppe besitzen, und/oder mehrwertigen Alkoholen (c2) und/oder mindestens einem Amin (b1) oder Polyamin (b2) mit Verbindungen (a), so zur Reaktion gebracht wird, daß die entstandenen Umsetzungsprodukte keine freien Phenol-, 1,2-Epoxid- oder 2-Oxo-1,3-dioxolangruppen und keine freien primären und sekundären Aminogruppen mehr enthalten. Dieses Reaktionsfolge kann schrittweise aufbauend auf Verbindungen a erfolgen oder auch so durchgeführt werden, daß beispielsweise Verbindungen b in Abmischung mit Verbindungen c mit den Verbindungen a in Reaktion gebracht werden.

Die Herstellung der erfindungsgemäßen Polymere oder Polymergemische A kann in der Weise erfolgen, daß man zunächst Verbindungen (a1), die mindestens eine 1,2-Epoxidgruppe oder Verbindungen (a2), die mindestens eine 2-Oxo-1,3-dioxolangruppe (Carbonatgruppe) enthalten oder gemischte Epoxid/Carbonate (a3), die jeweils bereits die phenolische Komponente c enthalten, gegebenenfalls vorher synthetisiert und mit mindestens einem Amin (b1) oder Polyamin (b2), so umsetzt, daß die entstehenden Umsetzungsprodukte A keine freien 1,2-Epoxid- oder 2-Oxo-1,3-dioxolangruppen sowie keine freien primären und sekundären Aminogruppen mehr enthalten und damit für Folgereaktionen mit Epoxiden und/oder Aminen weitgehend inert sind. Als freie Aminogruppe wird in diesem Zusammenhang eine Aminogruppe verstanden, die noch mindestens ein Wasserstoff-Atom am Stickstoff trägt.

Der Polymeraufbau kann auch so erfolgen, daß durch die Wahl der eingesetzten Verbindungen und Anteile von a, b und c verschiedenartige Polymere A nebeneinander erzeugt werden.

Die eingesetzten Epoxidverbindungen a1 besitzen im Mittel mindestens eine, vorzugsweise zwei 1,2-Epoxidgruppen pro Molekül. Sie können sowohl gesättigt als auch ungesättigt sowie aliphatisch, cycloaliphatisch, aromatisch und heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl-, Arylsubstituenten, Alkyl/Arylsubstituenten, Ethergruppierungen oder ähnliche. Derartige Epoxidverbindungen a1 sind beispielsweise Glycidylether von mehrwertigen Phenolen, beispielsweise Resorcin, Hydrochinon, 4,4'-Dihydroxydiphenylmethan, Isomerengemischen des Dihydroxydiphenylmethans (Bisphenol F), 4,4'-Dihydroxy-3,3'dimethyldiphenylmethan, 4,4'-Dihydroxydiphenyldimethylmethan (Bisphenol A), 4,4'-Dihydroxydiphenylmethan, 4,4'-Dihydroxydiphenylcyclohexan, 4,4'-Dihydroxy-3,3'-dimethyldiphenylpropan, 4,4'-Dihydroxydiphenyl, 4,4'-Dihydroxydiphenylsulfon, Tris(4-hydroxyphenyl)-methan, 4,4'-Dihydroxybenzophenon, Bis(4-hydroxyphenyl)-1,1-isobutan, Bis(4-hydroxy-tert.-butyl-phenyl)-2,2-propan, Bis(2-hydroxynaphthyl)methan, 1,5-Dihydroxynapthalin, Bis(4-hydroxyphenyl)ether oder den Hydrierungs-, Chlorierungs- und Bromierungsprodukten der vorstehend genannten Verbindungen, sowie Novolaken. Auch anteilige Verwendung von Glycidylethern mehrwertiger Alkohole sind als Verbindungen a1 geeignet. Als Beispiele derartiger mehrwertiger Alkohole seien Ethylenglykol, Diethylenglykol, Triethylenglykol, 1,2-Propylenglykol, 1,4-Propylenglykol, 1,5-Pentandiol, 1,2,6-Hexantriol, Glycerin, Trimethylolpropan und Bis(4-hydroxycyclohexyl)-2,2-propan genannt.

Unter Glycidylether im Rahmen dieser Erfindung werden vorzugsweise solche Glycidylether der allgemeinen Formel I 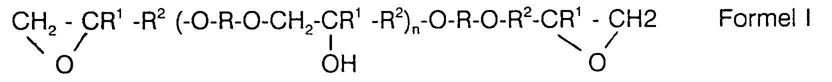
mit
- R =: 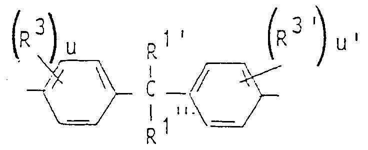
- R¹, R^{1'},R^{1''} =: unabhängig voneinander H oder CₘH₂ₘ₊₁,
- R² =: linearer oder verzweigter gesättigter Kohlenwasserstoffrest mit bis zu 8 Kohlenstoffatomen, vorzugsweise -CH₂-,
- R³, R^{3'} =: jeweils unabhängig voneinander Halogen, Aryl, Alkyl, Aralkyl,
- n =: 0 bis 8, bevorzugt 1 bis 6,
- m =: 1 bis 8, bevorzugt 1,
- u,u' =: unabhängig voneinander 0 bis 4, vorzugsweise 0 oder 1 verstanden.

Diese Polyglycidylether besitzen eine mittlere Molmasse (Mn) von etwa 200 bis 10000 und ein Epoxid-Äquivalentgewicht von etwa 120 bis 5000. Solche Harze sind Umsetzungsprodukte von Epichlorhydrin oder Methylepichlorhydrin mit Dihydroxydiphenylmethan (Bisphenol F) oder Dihydroxydiphenylpropan (Bisphenol A), sowie mit Dihydroxybenzophenon oder Dihydroxynaphthalin. Polyepoxide mit geeignetem Molekulargewicht werden entweder durch Auswahl der Molverhältnisse von Bisphenol und Epichlorhydrin oder durch Reaktion der monomeren Diglycidylverbindungen mit weiterem Bisphenol gegebenenfalls unter Zusatz von Katalysatoren wie Lewis-Säuren oder Phosphoniumsalzen hergestellt. Die Epoxidharze können vollständig oder teilweise hydriert sein oder in Gemischen mit unterschiedlicher Struktur und Molmasse eingesetzt werden.

Weiterhin kann ein Teil des beschriebenen Polyglycidylethers durch aliphatische Polyglycidylether der Formel II 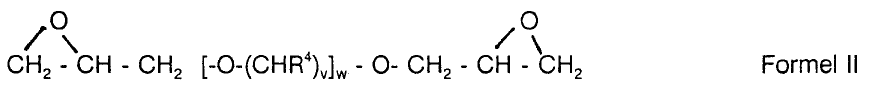
mit
- R⁴ =: H oder einem gegebenenfalls substituierten (C₁-C₄)-Alkylrest,
- v =: 2 bis 6 und
- w =: 2 bis 100, vorzugsweise 3 bis 50,
ersetzt werden. Beispiele sind Bisglycidylether aus Polypropylenglykol oder Polybutylenglykol mit verschiedenem Molekulargewicht. Die Epoxidharze können auch durch Reaktion mit langkettigen Polyalkoholen wie Hexandiol-1,6, Neopentylglykol, Bisethoxyliertes Neopentylglykol, Hydroxypivalinsäureneopentylglykolester und Bis(hydroxymethyl)cyclohexan, Monoanhydropentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen modifiziert werden. Während Polyalkohole mit primären Hydroxylgruppen sich bei geeigneter Katalyse direkt mit Polyglycidylethern umsetzen lassen, können sekundäre Hydroxylgruppen zunächst mit Diisocyanat umgesetzt werden. Das erhaltene Isocyanat-terminierte Reaktionsprodukt kann dann ohne Schwierigkeiten als Brücke zwischen zwei Polyglycidylether-Einheiten unter Vergrößerung des Molekulargewichts und der Funktionalität eingebaut werden.

Weiter kommen als Epoxidverbindungen (Poly)glycidylester der Formel III 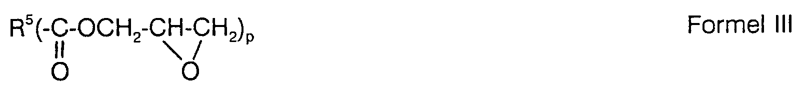
in Frage mit
- R⁵ =: linearer oder verzweigter, gesättigter oder ungesättigter Kohlenwasserstoffrest mit bis zu 40, vorzugsweise bis zu 10 Kohlenstoffatomen oder ein gegebenenfalls substituierter Phenylrest und
- p =: 1 bis 5, vorzugsweise 2 oder 3, insbesondere 2.

Solche Polyglycidylester von Polycarbonsäuren erhält man durch die Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Terephthalsäure, Hexahydrophthalsäure, 2,6-Naphthalindicarbonsäure und dimerisierte Fettsäuren. Beispiele hierfür sind Terephthalsäurediglycidylester und Hexahydrophthalsäurediglycidylester.

Als Epoxidgruppen enthaltende Harze a1 kommen auch Verbindungen in Frage, deren Epoxidgruppen teilweise mit Aminen umgesetzt sind. Solche Amino-Epoxidharze können zum Senken der Aminzahl auch mit gesättigten oder ungesättigten Polycarbonsäuren und/oder Hydroxyalkylcarbonsäuren weiter modifiziert sein. Aliphatische, cycloaliphatische und/oder aromatische Polycarbonsäuren verschiedener Kettenlänge sind beispielsweise Adipinsäure, Sebacinsäure, Fumarsäure und Maleinsäure sowie deren Anhydride, Isophthalsäure und dimere Fettsäure. Als Hydroxyalkylcarbonsäuren werden Milchsäure, Dimethylolpropionsäure oder auch Carboxyl- und Hydroxylgruppen-haltige Polyester verstanden. Bei der Umsetzung von überschüssigem Polyglycidylether mit niedrigem Molekulargewicht mit Polycarbonsäuren und/oder Polyalkoholen werden als Zwischenstufe modifizierte Polyglycidylether erhalten, die dann weiter mit Aminen und/oder Aminoalkoholen reagieren können.

Es können auch heterocyclische Polyepoxidverbindungen verwendet werden, wie 1,3-Diglycidyl-5,5-dimethylhydantoin, Triglycidylisocyanurat oder Diepoxide aus Bisimiden. Eine andere geeignete Klasse von Polyepoxiden sind Polyglycidylether von phenolischen Novolakharzen, mit denen die Funktionalität von 2 bis auf etwa 6 Glycidylgruppen pro Molekül gesteigert werden kann. Durch Defunktionalisieren mit langkettigen Alkylphenolen wie Dodecylphenol können zusätzliche Teilstrukturen eingebaut werden.

Weitere geeignete Epoxidverbindungen sind in dem Handbuch "Epoxidverbindungen und Epoxidharze" von A.M. Paquin, Springer Verlag, Berlin 1958, Kapitel IV, in Lee, Neville "Handbook of Epoxy Resins", 1967, Kapitel 2 und in Wagner/Sarx, "Lackkunstharze", Carl Hanser Verlag (1971), S. 174 ff. beschrieben.

Als Verbindungen a2 können beliebige Materialien eingesetzt werden, sofern sie mindestens eine, vorzugsweise zwei oder drei 2-Oxo-1,3-dioxolangruppen (cyclische Carbonatgruppen) pro Molekül enthalten und keine anderen funktionellen Gruppen aufweisen, die die Reaktion mit der Komponente b stören. Das Molgewicht Mn (Zahlenmittel, bestimmt mittels Gelchromatographie mit Polystyrolen als Standard), sollte im allgemeinen zwischen 100 und 10 000, vorzugsweise zwischen 150 und 5000 liegen und das 2-Oxo-1,3-dioxolan-Äquivalentgewicht zwischen 100 und 1500. Die cyclischen Carbonatgruppen sind vorzugsweise endständig, jedoch können auch Verbindungen als Komponente a2 engesetzt werden, die diese Gruppen in statistischer Verteilung über die Molekülkette enthalten und die durch Copolymerisation unter Verwendung von olefinisch ungesättigten, diese cyclischen Carbonat-Gruppen enthaltenden Verbindungen hergestellt werden können. Ein derartiges Herstellungsverfahren ist beispielsweise in DE-A 3 644 373 beschrieben.

Vorzugsweise besitzt die Komponente a2 die allgemeine Formel IV 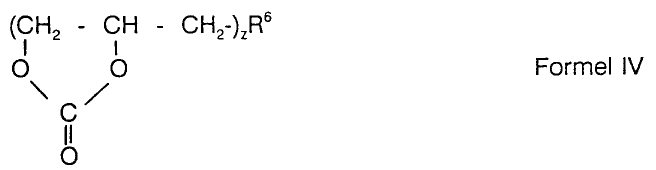
mit
- R⁶ =: z-wertiger Rest eines Phenols, Polyethers, Polyetherpolyols, Polyesters, Polyesterpolyols, der gegebenenfalls auch Amino- oder Alkylamino-Gruppen enthalten kann, oder z-wertiger Kohlenwasserstoffrest, vorzugsweise Alkylenrest mit 2 bis 18 Kohlenstoffatomen, der gegebenenfalls inerte Gruppen tragen kann, oder
z-wertiger Poly(sek.)aminrest oder
z-wertiger Rest eines Umsetzungsproduktes einer Epoxy-Carbonat-Verbindung mit Polyaminen, Polyolen, Polycaprolactonpolyolen, Hydroxylgruppen-haltigen Polyestern, Polyethern, Polyglykolen, Hydroxy-, Carboxy- und Amino-funktionellen Polymerölen mit mittleren Molekulargewichten von 800 bis 10 000, Polycarbonsäuren, Hydroxy- oder Amino-funktionellen Polytetrahydrofuranen und Reaktionsprodukten von Polyaminen mit Glycidylestern von α,α-Dialkylalkanmonocarbonsäuren der Summenformel C₁₂H₂₂O₃ bis C₁₄H₂₆O₃, beispielsweise der Versaticsäure (Shell Chemie, α-verzweigte Monocarbonsäure mit 9 bis 12 Kohlenstoffatomen),
- z =: 1 bis 5, vorzugsweise 2 oder 3, insbesondere 2.

Derartige Verbindungen und deren Herstellung sind beispielsweise in DE-A 3 726 497 beschrieben.

In manchen Fällen kann es zweckmäßig sein, als Komponente a3 zusätzlich oder gegebenenfalls ausschließlich gemischte Epoxid-Carbonate der allgemeinen Formel V 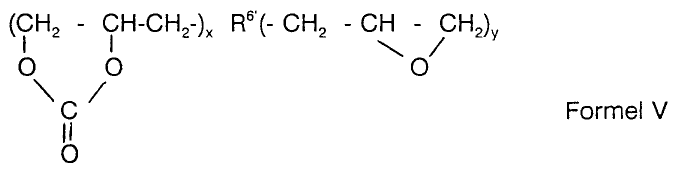
mit
- R^{6'} =: (x+y)-wertiger Rest eines Phenols, Polyethers, Polyetherpolyols, Polyesters, Polyesterpolyols, der gegebenenfalls auch Amino- oder Alkylamino-Gruppen enthalten kann, oder (x+y)-wertiger Kohlenwasserstoffrest, vorzugsweise Alkylenrest mit 2 bis 18 Kohlenstoffatomen, der gegebenenfalls inerte Gruppen tragen kann, oder
(x+y)-wertiger Poly(sek.)aminrest oder
(x+y)-wertiger Rest eines Umsetzungsproduktes einer Epoxy-Carbonat-Verbindung mit Polyaminen, Polyolen, Polycaprolactonpolyolen, Hydroxylgruppen-haltigen Polyestern, Polyethern, Polyglykolen, Hydroxy-, Carboxy- und Aminofunktionellen Polymerölen mit mittleren Molekulargewichten von 800 bis 10 000, Polycarbonsäuren, Hydroxy- oder Amino-funktionellen Polytetrahydrofuranen und Reaktionsprodukten von Polyaminen mit Glycidylestern von α,α-Dialkylalkanmonocarbonsäuren der Summenformel C₁₂H₂₂O₃ bis C₁₄H₂₆O₃, beispielsweise der Versaticsäure,
- x, y =: unabhängig voneinander 1 bis 5, vorzugsweise 2 oder 3, insbesondere 1.
zu verwenden
Bevorzugte Ausgangsstoffe zur Herstellung der cyclischen Carbonate und der gegebenenfalls eingesetzten gemischten Epoxy-Carbonat-Verbindungen sind die Polyglycidylether von mehrwertigen Phenolen und Alkoholen, beispielsweise Bisphenol A oder Bisphenol F. Die Glycidylether erhält man beispielsweise durch Umsetzung eines Polyphenols mit Epichlorhydrin. Polyphenole sind beispielsweise Bis(4-hydroxyphenyl)-2,2-propan, Bis(4-hydroxyphenyl)methan, 4,4'-Dihydroxybenzophenon, Bis(4-hydroxyphenyl)ether, Bis(4-hydroxyphenyl)-1,1-isobutan, Bis(2-hydroxynaphthyl)methan, 1,5-Dihydroxynaphthalin. Vorzugsweise sind zusätzlich freie Hydroxylgruppen zu den Epoxydgruppen im Polyglycidylether des Polyphenols enthalten. Auch Diglycidyladdukte von cyclischen Harnstoffen sind einsetzbar.

Als Amine (b1) können primäre Monoamine verwendet werden, vorzugsweise mit Alkyl- und Alkanolgruppen, beispielsweise Methylamin, Ethylamin, Propylamin, iso-Propylamin, Butylamin, iso-Butylamin, 2-Aminobutan, 4-Aminobutanol-2, Isoamylamin, Pentylamin, 3-Methylbutylamin, Heptylamin, Octylamin, 2-Ethylhexylamin, Isononylamin, Isotridecylamin, 2-Aminomethyl-1-propanol, Monoethanolamin, Mono(n- oder iso)propanolamin, Neopentanolamin, Methoxypropylamin, 2-(2-Aminoethoxy)ethanol, Kokosfettamin, Oleylamin, Stearylamin, Talgfettamin, Decylamin, Dodecylamin, Tetradecylamin, Hexadecylamin, Octadecylamin, Cyclopentylamin, Cyclohexylamin, 3-Methoxypropylamin, 3-Ethoxypropylamin, 3-Butoxypropylamin, 3-Isononyloxypropylamin, 3-Aminopropyltrimethoxy(ethoxytridecyloxy)silan, 2-Amino-2-hydroxy-methyl-1,3-propandiol. Es können auch sekundäre Monoamine verwendet werden, vorzugsweise Dialkylamine, Monoalkylhydroxyalkylamine oder Dihydroxyalkylamine. Beispiele für solche Verbindungen sind Dimethylamin, Diethylamin, Dipropylamin, D(n- oder iso-)propylamin, Dibutylamin, Diisobutylamin, Di-sek.-butylamin, N-Methylbutylamin, N-Methylaminoethanol, Diethanolamin, Dipentylamin, Dioctylamin, Di(2-ethylhexyl)amin, Diisononylamin, N-Ethylbutylamin, N-Ethylcyclohexylamin, Dicyclohexylamin, Distearylamin, Dikokosamin, Ditalgfettamin oder auch cyclische Amine, wie Morpholin, Pyrrolidin oder Oxazolidin oder gegebenenfalls substituiertes Anilin. Ebenso können Umsetzungsprodukte von primären Monoaminen mit Monoepoxiden als Substitut für die sekundäre Amine eingesetzt werden.

Weiterhin können primäre Amine der allgemeinen Formel VI

H₂N-CR⁷R⁸-R⁹-O-(CHR¹⁰-CHR¹¹O-)_{q}R¹² Formel VI

eingesetzt werden mit
- R⁷ und R⁸ =: Wasserstoff, ein Alkylrest oder eine Hydroxylgruppe,
- R⁹ =: linearer oder verzweigter Alkylrest, insbesondere ein Alkylrest mit 1 bis 3 Kohlenstoffatomen,
- R¹⁰ und R¹¹ =: Wasserstoff oder ein Alkylrest mit 1 bis 4 Kohlenstoffatomen,
- R¹² =: Wasserstoff, ein Alkyl-, Cycloalkyl- oder Phenylrest, vorzugsweise ein Alkylrest mit 1 bis 6 Kohlenstoffatomen und
- q =: 0 bis 5.

Als Beispiele für einsetzbare Verbindungen diesen Typs werden genannt: Ethanolamin, Propanolamin, Butanolamin, Ethylenglykol(2-aminoethyl)ether und Diethylenglykolmono(3-aminopropyl)ether. Beim Einsatz der primären Amine kann das Amin mit der Epoxidgruppe in Abhängigkeit von den angebotenen stöchiometrischen Verhältnissen unter Molekülvergrößerung reagieren. Als Beispiele geegnete Amine seien genannt ®Jeffamin M-Serie, ®Jeffamin D-Serie, ®Jeffamin ED-Serie (Texaco, ethoxylierte/propoxylierte Amine). Weiterhin kommen Di- oder Triamine mit primären und/oder sekundären Aminogruppen in Frage, beispielsweise Laurylpropylendiamin, Talgfettpropylendiamin.

Während die primären Monoamine mit Verbindungen a1 in der Regel unter Kettenverlängerung und mit Verbindungen a2 unter Kettenabbruch reagieren, sind die sekundären Monoamine mit Verbindungen a1 in der Regel als Kettenstopper einzusetzen. Neben der kettenverlängernden Wirkung der primären Amine kann aber auch die anteilige Bildung von sekundären Aminogruppierungen aus ihrem Umsatz mit a1 zum Heben der Aminzahl genutzt werden. Dementsprechende Reaktionen werden auch von Verbindungen a3 und/oder den Polyaminen (b2) eingegangen.

Als Polyamine (b2) werden Verbindungen verstanden, die mindestens zwei Aminogruppen im Molekül enthalten. Allgemein besitzen diese Verbindungen 2 bis 50, vorzugsweise 2 bis 20 Kohlenstoffatome.

Als Polyamine (b2) sind beispielsweise solche geeignet, die nur primäre Aminogruppen enthalten und vorzugsweise diprimär sind. Diese Polyamine reagieren mit Verbindungen a2 unter Kettenverlängerung und werden vorzugsweise in Abmischung mit den Polyaminen, insbesondere primär/tertiären Diaminen, eingesetzt. Letztere wirken bei der Reaktion mit einer mindestens difunktionellen Verbindung a2 als Kettenstopper.

Als Polyamine (b2) sind beispielsweise auch solche geeignet, die nur sekundäre Aminogruppen enthalten und vorzugsweise disekundär sind. Bei Reaktion dieser Polyamine mit Verbindungen a1 tritt Kettenverlängerung ein. Bevorzugt werden langkettige Diamine, beispielsweise N,N'-Dialkyldiaminoalkane oder Umsetzungsprodukte von Monoepoxiden, beispielsweise gesättigten Glycidylethern oder -estern, oder Epoxyalkanen mit primären Diaminoalkanen, beispielsweise dem Additionsprodukt von Hexandiamin-1,6 mit 2 Mol Glycidylester der Versaticsäure. Als Monoepoxide können für diesen Zweck auch gesättigte oder ungesättigte Glycidylether oder α-Epoxide verschiedener Kettenlänge wie 1,2-Epoxydodecan oder Butylenoxid eingesetzt werden.

Als Polyamine (b2) kommen auch solche Polyamine in Frage die mindestens eine freie primäre Aminogruppe enthalten und daneben noch zusätzlich sekundäre und/oder tertiäre Aminogruppen aufweisen. Polyamine, die neben den primären Aminofunktionen noch sekundäre enthalten, können nach der Reaktion mit der Komponente a2 beispielsweise mit Verbindungen a1 und/oder Mono-Epoxidverbindungen vorzugsweise Ethylenoxid, Propylenoxid, 2-Ethylhexansäureglycidylester, Versaticsäureglycidylester, zu tertiären Gruppen umgesetzt werden. Alternativ kann man sie auch mit den Isocyanaten zu Harnstoffstrukturen reagieren lassen.

Die Polyamine (b2) können beispielsweise durch die nachstehende Formel VII wiedergegeben werden. 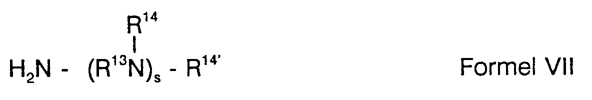
mit
- s =: Null oder eine ganze Zahl von 1 bis 6, vorzugsweise 1 bis 4,
- R¹³ =: ein zweiwertiger, vorzugsweise nichtaromatischer Kohlenwasserstoffrest mit 2 bis 18 C-Atomen, vorzugsweise ein verzweigter oder unverzweigter Alkylenrest mit 2 bis 10 C-Atomen, insbesondere mit 2 bis 6 Kohlenstoffatomen, oder ein Cycloalkylenrest mit 5 bis 12 Kohlenstoffatomen, vorzugsweise 6 bis 10 Kohlenstoffatomen, oder ein Aralkylenrest mit 7 bis 12 Kohlenstoffatomen, vorzugsweise 8 bis 10 Kohlenstoffatomen, oder einen Polyoxalkylenrest mit 2 bis 18 Kohlenstoffatomen,
- R¹⁴, R^{14'} =: unabhängig voneinander H oder 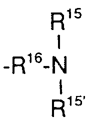
- R¹⁵, R^{15'} =: unabhängig voneinander H,
(C₁-C₂₀)-Alkyl, vorzugsweise (C₁-C₆)-Alkyl,
(C₁-C₁₆)-Hydroxyalkyl, vorzugsweise 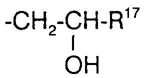
- R¹⁶ =: unabhängig von R¹³ die für R¹³ angegebene Bedeutung,
- R¹⁷ =: (C₁-C₁₂)-Alkyl, -CH₂-O-(C₁-C₁₂)-Alkyl,
-CH₂-O-Aryl, 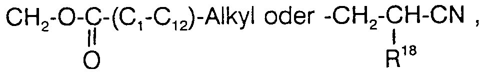
- R¹⁸ =: H oder (C₁-C₆)-Alkyl oder
- R¹⁵ und R¹⁶ =: Teil eines 5-, 6- oder 7-gliedrigen aliphatischen Ringes mit der Maßgabe, daß für s gleich Null R^{14'} nicht gleich H ist.

Weiterhin sind hier auch als Polyamine solche der Formel VIII.

X-(R¹⁹NH)ₜ-R²⁰-Y Formel VIII

geeignet, worin X, Y = NH₂ oder OH ist, jedoch nicht die gleiche Bedeutung haben, und R¹⁹, R²⁰ unabhängig voneinander die Bedeutung von R¹³ in der voranstehenden Formel VII haben und t die Bedeutung von s in der voranstehenden Formel VII hat.

Daneben sind beispielsweise auch die Polyamine und Polyaminopolyole geeignet, die in den Patentanmeldungen DE-A 36 44 371, DE-A 37 26 497 und DE-A 38 09 695 beschrieben sind. Auf diese Literaturstellen einschließlich der darin beschriebenen bevorzugten Ausführungsformen wird hiermit Bezug genommen. Weiterhin kommen auch Polyaminoamide oder Kondensationsprodukte von diprimären Aminen mit Dicarbonsäuren, beispielsweise Adipinsäure oder dimere Fettsäuren, sowie Polyglykolpolyamine oder Aminaddukte, beispielsweise AminEpoxidharz-Addukte, in Betracht.

Beispiele für geeignete Polyamine (b2) sind Ethylendiamin, Propylendiamin, 2-Methylpentamethylendiamin, Pentamethylendiamin, Hexamethylendiamin, Trimethylhexamethylendiamin, Neopentyldiamin, Octamethylendiamin, Triacetondiamin, Dioxadecandiamin, Dioxadodecandiamin und höhere Homologe, cycloaliphatische Diamine wie 1,2-, 1,3- oder 1,4-Cyclohexandiamin sowie Laurylpropylendiamin und Talgfettpropylendiamin, 4,4'-Methylenbiscyclohexylamin, 4,4'-Isopropylenbiscyclohexylamin, Isophorondiamin, Tricyclododecenyldiamin, Menthandiamin, 4,4'-Diamino-3,3'dimethyldicyclohexylmethan, 3-Aminomethyl-1-(3-aminopropyl-1-methyl)-4-methylcyclohexan, N-Methylethylendiamin, N-Aminoethylpiperazin, 2-Aminoethylpiperazin, N,N-Dimethylethylendiamin, N,N-Dimethylpropylendiamin, N,N-Dimethylaminopropylamin, N,N-Bisaminopropyl-N,N'-dimethylaminopropylamin, N,N-Dihydroxyethylendiamin, aromatische Amine wie m-Xylylendiamin, aliphatische Poly(tri-, tetra-)amine wie Diethylentriamin, Dipropylentriamin, Bishexamethylentriamin, Triethylentetramin, Tetraethylenpentamin, Pentaethylenhexamin, Methyliminobispropylamin, N-Alkylaminodipropylentriamine (Alkyl = CH₃-, C₄H₉-,(CH₃)₂N(CH₂)₃-), Tetrapropylenpentamin, ferner Alkanolamine wie Aminoethylethanolamin, N-(2-Hydroxypropyl)ethylendiamin, Ethylenglykolbispropylamin,Hydroxyethylaminoethylamin,Hydroxyethyldiethylentriamin, Polyoxypropylendiamin, vorzugsweise mit mittlerem Molgewicht von ca. 200 bis 400. Bevorzugte Polyamine sind N,N-Bisaminopropyl-N-methylamin, N-Aminopropylmethylamin, N-Aminopropylpropylamin, Talgfettpropylendiamin und insbesondere Dimethylaminopropylamin sowie Diethylaminopropylamin und N-Cyclohexyl-1,3-propylendiamin, 3-Dimethylaminopropylamin, 2-Diethylaminoethylamin, Dimethylaminoneopentylamin.

Als Phenole (c), die einzeln oder im Gemisch Verwendung finden können, seien genannt Phenol, m-Kresol, 3,5-Dimethylphenol, m-Ethoxyphenol, p-Oxybenzylphenol, o-Oxybenzylphenol. Vorzugsweise werden Phenole (c) eingesetzt, die mindestens zwei phenolische Hydroxyfunktionen enthalten, beispielsweise Resorcin, Hydrochinon, 4,4'-Dihydroxydiphenylmethan, Isomerengemischen des Dihydroxydiphenylmethans (Bisphenol F), 4,4'-Dihydroxy-3,3'-dimethyldiphenylmethan, 4,4'-Dihydroxydiphenyldimethylmethan (Bisphenol A), 4,4'-Dihydroxydiphenylmethan, 4,4'-Dihydroxydiphenylcyclohexan, 4,4'-Dihydroxy-3,3'-dimethyldiphenylpropan, 1,2-, 1,3-, 1,5-, 1,6-, 2,2'- und 4,4'-Dihydroxydiphenyl, 4,4'-, 2,5'- und 3,3'-Dihydroxy-2,2'-bipyridyl, 4,4'-Dihydroxydiphenylsulfon, 4,4'-Bis-(4-hydroxyphenyl)valeriansäure und deren Amid, Bis-(4-hydroxyphenyl)sulfid, 2,2-Bis-(4-hydroxyphenyl)essigsäure und deren Amid, Tris(4-hydroxyphenyl)methan, 4,4'-Dihydroxybenzophenon, Bis(4-hydroxyphenyl)-1,1-isobutan, Bis(4-hydroxy- tert.-butylphenyl)-2,2-propan, Bis(2-hydroxynaphthyl)methan, 1,5-Dihydroxynaphthalin, Bis(4-hydroxyphenyl)ether oder den Hydrierungs-, Chlorierungs- und Bromierungsprodukten der vorstehend genannten Verbindungen, sowie Novolake. Besonders bevorzugt sind Resorcin, Bisphenol A und Bisphenol F.

Als Phenole (c) finden insbesondere alkylierte, arylierte oder alkarylierte, gegebenenfalls isomerisierte, ein- und/oder mehrwertige Phenole Verwendung. Als Alkylierung, Arylierung oder Aralkylierung wird hierbei die elektrophile Substitutionen an aromatischen Kernen von Phenolgrundkörper mit ungesättigten Verbindungen verstanden. Die Phenole c werden insbesondere charakterisiert durch die Formeln IX 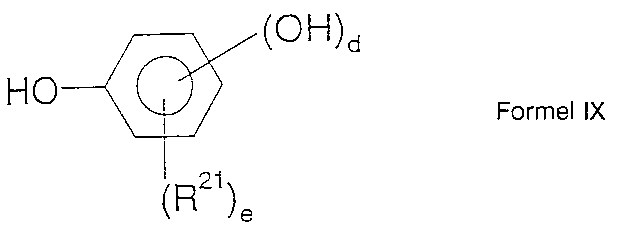
mit
- R²¹ =: (C₂-C₁₈-), vorzugsweise (C₂-C₄)-Alkyl, (C₅-C₆)-Cycloalkyl, Phenyl, mit zumindest einem (C₁-C₁₈)-Alkylrest substituiertes Phenyl, mit zumindest einem Phenylrest substituiertes (C₂-C₁₈)-Alkyl,
- d =: eine Zahl von 0 bis 4, vorzugsweise 1 oder 2, und
- e =: eine Zahl von 1 bis 5, wobei der Wert für e kleiner oder gleich der Differenz 5 von minus d ist,
oder Formel X 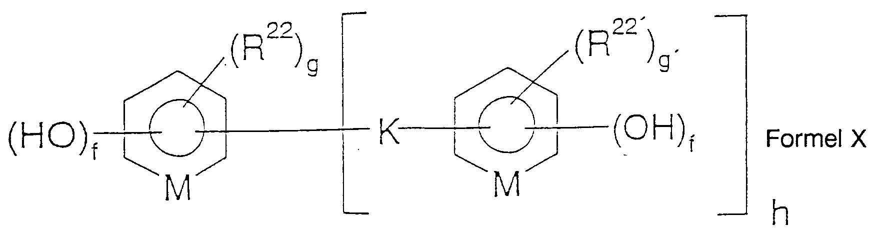
mit
- f =: 1 oder 2,
- g =: 1 bis 4
- g' =: 0 bis 4,
- h =: 1 oder 2,
- M =: = CH- oder ein Heteroatom, vorzugsweise ein Stickstoffatom,
- R²² =: die gleiche Bedeutung wie R²¹,
- R^{22'} =: H oder die gleiche Bedeutung wie R²¹,
- K =: eine Einfachbindung, CH₂, C(CH₃)₂, S(O), S, S-S, C(O) oder eine Gruppe der Formel XI 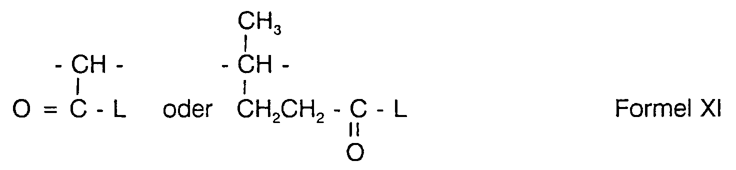
- L =: eine Hydroxylgruppe, 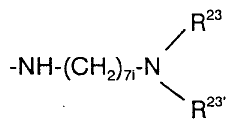
oder eine Gruppe der Formel XII 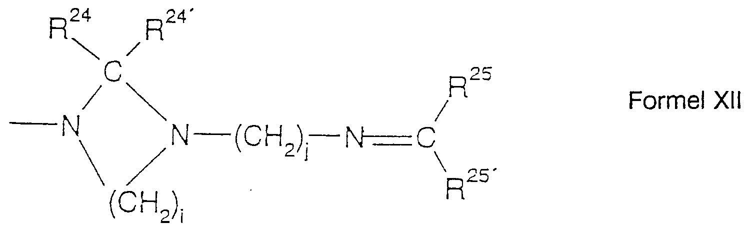
mit
- R²³, R²⁴, R²⁵, R^{23'}, R^{24'}, R^{25'} =: unabhängig voneinander Wasserstoff oder (C₁-C₄)-Alkyl,
- i, j =: unabhängig voneinander 1 bis 4, vorzugsweise 2 oder 3.

Zur Herstellung der erfindungsgemäß bevorzugt einzusetzenden, alkylierten, arylierten oder alkarylierten Phenole (c) können als phenolische Grundkörper ein- oder mehrkernige Phenole, beispielsweise Phenol, vorzugsweise solche, die mehrere Hydroxylgruppen am selben aromatischen Ring tragen, beispielsweise Phloroglucin, Pyrogallol, Hydrochinon, Brenzkatechin, insbesondere Resorcin, verwendet werden.

Als Phenolgrundkörper eignen sich auch Phenole auf Basis kondensierter aromatischer Ringsysteme. Letztere werden beispielsweise beschrieben durch die Formel XIII. 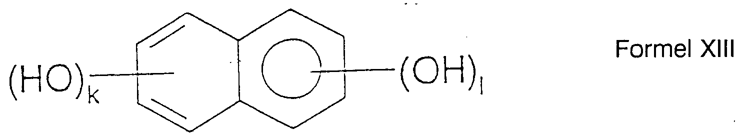
oder Formel XIV 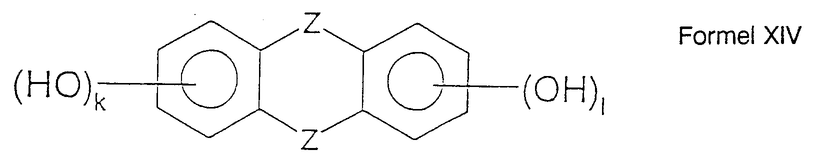
mit
- k =: 0 bis 2,
- l =: 1 bis 3, vorzugsweise 1 oder 2,
wobei die Summe von k und l mindestens 2 beträgt, und
- Z =: =CH-, 〉C=O, ein Sauerstoffatom oder ein Stickstoffatom.

Beispielhaft seien genannt 1,4-Dihydroxynaphthalin und dessen Stellungsisomere, Dihydroxyanthrachinon, Chinizarin, Anthraflavinsäure.

Es können auch Phenole (c) ihrerseits als Phenolgrundkörper zur Herstellung weiterer Verbindungen c dienen.

Die als Phenole (c) bevorzugt einzusetzenden Mono(alkylaryl)phenole sind an sich bekannte Verbindungen, die häufig in der Literatur auch als styrolisierte Phenole bezeichnet werden. Gemäß den Ausführungen in der Österreichischen Patentschrift AT-C 284 444 sind die Reaktionen von Styrolen mit Phenolen bekannt und stellen im wesentlichen Alkylierungsreaktionen dar, bei denen sich die Vinylgruppe der Styrole in ortho- oder para-Stellung zur Hydroxylrguppe des Phenols addiert. Bei dieser Reaktion werden im allgemeinen Friedel-CraftsKatalysatoren, beispielsweise Säuren und Lewis-Säuren, verwendet. In Abhängigkeit von den Reaktionsbedingungen, Katalysatoren und Mengenverhältnissen der Reaktionsteilnehmer erhält man dabei mono-, di- oder tri-styrolisierte Phenole. Auch aus der Deutschen Offenlegungsschrift DE-A 1 940 220 sind Arylalkylphenolprodukte und Verfahren zur Herstellung derselben bekannt.

Die bevorzugten Arylalkylphenole (c) können durch Addition von einer Vinylverbindung an Phenole bei einem molaren Verhältnis der phenolischen Hydroxylgruppen im Phenol zur aromatischen Vinylverbindung von 1:1 bis 1:2 in Anwesenheit von Mineralsäure oder Friedel-Crafts-Katalysatoren in bekannter Weise hergestellt werden.

Als Vinylverbindungen können natürliche oder synthetische Verbindungen mit einer oder mehreren Kohlenstoff-Kohlenstoff-Doppelbindungen, im letzteren Fall auch konjugierte Doppelbindungen, verwendet werden. Als natürliche ungesättigte Verbindungen können ungesättigte Fettsäuren, die daraus abgeleiteten fetten Öle, Fettsäureamide oder Fettalkohole verwendet werden. Geeignete Ausgangsverbindungen sind ferner ungesättigte Naturstoffe auf Terpenbasis, zum Beispiel Terpentinöl, Kolophonium. Als synthetische ungesättigte Kohlenwasserstoffverbindungen können Alkene, Diene oder noch höher ungesättigte Kohlenwasserstoffe verwendet werden, beispielsweise Buten, Isobuten, Isoocten, Isononen, Isododecen, oder zweifach ungesättigte Verbindungen, beispielsweise Butadien, Isopren, Chloropren, Dichlorbutadien, Dicyclopentadien. Es können auch Gemischen von Alkenen und gegebenenfalls von Alkenen mit Alkanen verwendet werden, wie sei beispielsweise bei der Crackung oder Dehydrierung von Kohlenwasserstoffen, beispielsweise Erdöl, oder Oligomerisierung von Olefinen, insbesondere von Isobutylen, Propylen oder n-Buten oder der Kohlenoxidierung entstehen. Geeignet sind auch acetylenisch ungesättigte Verbindungen, beispielsweie Acetylen oder (C₁-C₁₀)-Alkyl- bzw. Di-(C₁-C₁₀)-alkylacetylene.

Es können beispielsweise folgende ungesättigte Verbindungen als Ausgangsstoffe zur Herstellung von Verbindungen c verwendet werden: n-Penten-(l), n-Hexen-(1), n-Octen-(1), n-Nonen-(1), n-Decen-(1), n-Undecen-(1), n-Dodecen-(1), Propylen-(1), n-Buten-(1), vorgenannte Alkene, die in 2-Stellung oder 3-Stellung oder gegebenenfalls 4-Stellung durch die Methyl-, Ethyl-, n-Propyl-, Isopropyl-, n-Butyl-, Isobutyl-, sek.-Butyl,- tert.-Butyl-Gruppe substituiert sind; 2,3-Dimethyl-n-buten, 3,3-Dimethyl-n-buten, 2,5-Dimethylhepten, 3,3-Dimethylhepten, 2,3,4-Trimethylhepten, 2,4-Dimethylhepten, 2,3-Dimethylhepten, 4,4-Dimethylhepten, 2,3-Diethylhexen, 4,4-Dimethylhexen, 2,3-Dimethylhexen, 2,4-Dimethylhexen, 2,5-Dimethylhexen, 3,3-Dimethylhexen, 3,4-Dimethylhexen, 2-Methyl-3-ethylpenten, 3-Methyl-3-ethylpenten, 2,3,3-Trimethylhepten, 2,4,4-Trimethylpenten, 2,3,3-Trimethylpenten, 2,3,4-Trimethylpenten, 2,3,3,4-Tetramethylpenten; analoge Alkene, deren Doppelbindung in 2-Stellung oder in 3-Stellung im Molekül liegen; verzweigte Alkene, wie sie in Gestalt von Gemischen bei der Dimerisierung von Isobutylen oder n-Buten (Octene) oder Trimerisierung von Isobutylen oder n-Buten (Dodecene) oder Propylen (Nonene) bzw. Tetramerisierung von Propylen (Dodecene) anfallen.

Als aromatische Vinylverbindungen werden insbesondere Styrolderivate engesetzt. Als Styrolderivate seien bespielsweise α-Methylstyrol, Styrol, o-Methylstyrol, m-Methylstyrol, p-Methylstyrol, handelsübliches Vinyltoluol (Isomerengemisch), 3,4-Dimethylstyrol, 2,4-Dimethylstyrol, 2,5-Dimethylstyrol, 2,6-Dimethylstyrol, o-Ethylstyrol, m-Ethylstyrol, p-Ethylstyrol, 3,4-Diethylstyrol, 2,4-Diethylstyrol, 2,5-Diethylstyrol, 2,6-Diethylstyrol, o-Propylstyrol, m-Propylstyrol, p-Propylstyrol, o-Isopropylstyrol, m-Isopropylstyrol, p-Isopropylstyrol, o-Butylstyrol, m-Butylstyrol, p-Butylstyrol, o-Isobutylstyrol, m-Isobutylstyrol, p-Isobutylstyrol, sek.-Butylstyrol, m-sek.-Butylstyrol, p-sek.-Butylstyrol, o-tert.-Butylstyrol, m-tert.-Butylstyrol, p-tert.-Butylstyrol, p-Bromstyrol, p-Chlorstyrol, 2,4-Dibromstyrol, 2,4-Dichlorstyrol, 2,4,6-Trichlorstyrol.

Besonders bevorzugt werden als Vinylverbindungen Vinylaromaten der Formel XV 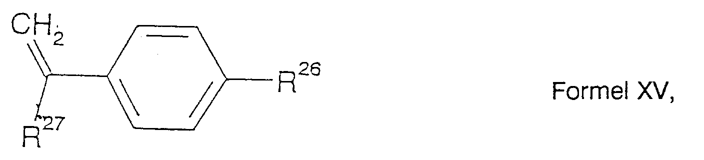
in der R²⁶ ein Wasserstoffatom oder einen Methylrest und R²⁷ ein Wasserstoffatom oder einen Alkylrest mit 1-3 Kohlenstoff-Atomen oder den Rest
-C = CH₂
R²⁸
darstellt, in dem R²⁸ unabhängig die gleiche Bedeutung wie R²⁶ haben kann, beispielsweise Styrol und α-Methylstyrol.

Zur Herstellung der Polymere oder Polymergemische A aus den Komponenten a, b und c sind die Molverhältnisse zwischen Epoxid-, cyclischen Carbonat-, Amino- und Phenolgruppen-haltigen Verbindungen so zu wählen, daß der vollständige Einbau der Phenol-, Carbonat- und Epoxidgruppen gewährleistet ist.

Umsetzungen werden im allgemeinen so lange vorgenommen, bis eine konstante oder die theoretische Aminzahl erreicht ist. Reaktionen von Verbindungen a, b und c werden dabei in den erforderlichen stöchiometrischen Mengenverhältnissen bei erhöhten Temperaturen, beispielsweise 40 bis 300 °C, vorzugsweise 50 bis 250 °C, besonders bevorzugt zwischen 80 und 200 °C, durchgeführt, wobei gegebenenfalls mit Hilfe von Lösungsmitteln und/oder Katalysatoren gearbeitet werden kann. Es ist darauf zu achten, daß keine Gelierung eintritt. Es können alle Amine gleichzeitig mit den Epoxidgruppen und/oder Carbonatgruppen umgesetzt oder es kann stufenweise vorgegangen werden. Es können so auch Gemische aus verschiedenen Epoxid-Amin-Addukten und/oder Carbonat-Amin-Addukten erhalten werden. Die Reaktion mit den Aminen beginnt schon bei Raumtemperatur und ist im allgemeinen exotherm. Um eine vollständige Umsetzung zu erreichen, ist es in der Regel notwendig, die Temperatur zeitweise auf Werte zwischen 40 und 250 °C zu erhöhen. Während für die Umsetzung primärer Aminogruppen mit den 2-Oxo-1,3-dioxolan-Gruppen im allgemeinen kein Katalysator erforderlich ist, ist eine Katalyse für die Reaktion der reaktionsträgeren sek.- Aminogruppen zweckmäßig. Geeignete Katalysatoren hierfür sind stark basische Verbindungen, wie quartäre Ammoniumverbindungen, beispielsweise Alkyl, Aryl- und/oder Benzylammoniumhydroxide und -carbonate. Spezielle Vertreter für quartäre Ammoniumverbindungen sind hier (C₁₆-C₂₂)-Alkylbenzyldimethylammoniumhydroxyd, Benzyltrimethylammoniumhydroxyd und Tetrabutylammoniumhydroxyd. Bevorzugt sind als Katalysatoren stark basische Amine, beispielsweise Diazabicyclooctan (DABCO), Guanidin. Weiterhin sind hier auch sogenannte supranukleophile Katalysatoren, beispielsweise 4-Pyrrolidinylpyridin, Poly-(N,N-dialkylaminopyridin) geeignet (vgl. hierzu Artikel von R. A. Vaidya et al. in Polymer Preprints, Bd. 2 (1986), S. 101 - 102).

Optional kann zur Herstellung der erfindungsgemäßen Harzsysteme mit Zusatz von Lösungsmitteln gearbeitet werden, die nach Beendigung der Harzsynthesen im Vakuum entfernt werden können, beispielsweise mit Glykolethern wie Ethylenglykolen, Propylenglykolen, Butylenglykolen, beispielsweise Methylglykol, Ethylglykol, Butylglykol, Methyldiglykol, Ethyldiglykol, Butyldiglykol, Methyltriglykol, Ethyltriglykol, Butyltriglykol, Methyltetraglykol, Ethyltetraglykol, Butyltetraglykol, ®Polyglykol-M-250 (MG = 260-275, OH-Zahl 204-215), ®Polyglykol-M-350 (MG = 335-265, OH-Zahl 154-167), 2-n-Propoxyethanol, 2-(1-Methylethoxy)ethanol, 2-n-Butoxyethanol, 2-(2-Methoxyethoxy)ethanol, 2-(2-Ethoxyethoxy)ethanol, 2-(2-Butoxyethoxy)ethanol,Triethylenglykolmonomethylether,Tetraethylenglykolmonomethylether, 2,5,8,11-Tetraoxadodecan, 1-Methoxy-2-propanol, 1-Ethoxy-2-propanol, Tripropylenglykolmonomethylether, Propylenglykolmethylether, Dipropylenglykolmethylether, Tripropylenglykolmethylether, Propylenglykol-n-butylether, Dipropylenglykol-n-butylether, Tripropylenglykol-n-butylether,®PHB (MG > 250, Kp > 274 °C) und Propylenglykolphenylether.

Als Neutralisationsmittel kommen sowohl organische Säuren, beispielsweise Ameisensäure, Dimethylolpropionsäure, Essigsäure, Glykolsäure, Gluconsäure, Hydroxyessigsäure, Propionsäure, Buttersäure, Milchsäure, Valeriansäure, Capronsäure, Önanthsäure, Caprylsäure, Pelargonsäure, Caprinsäure, Laurinsäure, Myristinsäure, Palmitinsäure, und Stearinsäure, bevorzugt Ameisensäure, Essigsäure und Milchsäure, als auch anorganische Säuren, beispielsweise Phosphorsäure, Schwefelsäure, Borsäure und Chlorwasserstoffsäure in Frage.

Erfindungsgemäß enthalten die Kunstharzmischungen neben den Polymeren oder Polymergemischen A optional auch Polymere B. Die Herstellung der Polymerharze B erfolgt über Polymerisation in Gegenwart von A, wobei A zumindest teilneutralisiert, optional in Wasser vorliegen kann. Unter Emulsionspolymerisationsbedingungen sollen die Polymere oder Polymergemische A in Menge und Neutralisationsgrad so vorhanden sein, der ausreichend ist, die erwünschten Emulgiereffekte herbeizuführen. Andererseits sollte sowohl aus wirtschaftlichen Gründen als auch aus Gründen der Beeinflussung der anwendungstechnischen Eigenschaften der herzustellenden Emulsionspolymerisate der Anteil der Harze A und deren Neutralisationsgrad nicht zu hoch sein. Es wird deshalb ein Gehalt an Polymeren oder Polymergemischen A von vorzugsweise 4 bis 56 Gew.-%, insbesondere 10 bis 50 Gew.-%, besonders bevorzugt 12 bis 42 Gew.-%, bezogen auf die Gesamtenge der Polymere A und B eingesetzt.

Verfahren zur Emulsionspolymerisation sind dem Fachmann bekannt. Üblicherweise zeichnen sie sich dadurch aus, daß in wäßriger Phase in Gegenwart von Radikalstartern und Emulgatoren, Schutzkolloiden oder anderen Stabilisatoren eine radikalische Polymerisation von ethylenisch ungesättigten Monomeren durchgeführt wird. Die genannten Komponenten können auf verschiedene Weise in die Emulsionspolymerisation eingebracht werden. Bei Verwendung der erfindungsgemäßen Polymerharze A in Emulsionspolymerisationen als Stabilisatoren kann aufgrund der guten Emulgierleistung dieser Polymeren auf die Gegenwart von niedermolekularen Tensiden und auf Schutzkolloide verzichtet werden. Die wäßrige Phase wird üblicherweise zum größten Teil vorgelegt, wobei eine anteilige Zugabe von Wasser während der Reaktion in Form einer Radikalstarterlösung oder Monomerpreemulsion möglich ist. Stabilisatoren können vollständig oder teilweise vorgelegt und der Rest während der Polymerisation zudosiert werden. Die Monomere können vollständig vorgelegt werden oder in reiner Form oder als Preemulsion in Wasser zudosiert werden. Der Radikalstarter wird meistens teilweise vorgelegt und teilweise als wäßrige Lösung zudosiert. Als Vorlage wird die Mischung bezeichnet, die vor Einstellung der Reaktionstemperatur von üblicherweise 20 bis 99 °C in den Reaktor eingebracht wird. Die Polymerisation wird meistens durch thermische Zersetzung der Radikalstarter oder durch Redoxsysteme eingeleitet und kann als beendet angesehen werden, wenn der größte Teil der durch radikalische Kettenreaktion umsetzbaren Monomeren abreagiert ist. Üblicherweise bleiben bei diesem Verfahren zirka 0,001 bis 0,1 Gew.-% Restmonomere zurück. Anderenfalls kann bei höherem Restmonomergehalt mit den üblichen thermischen oder redoxinitierten Radikalbildnern nachbehandelt werden. Derartige Verfahren beziehungsweise Verfahrensvarianten werden beispielsweise in Ullmann, Enzyklopädie der technischen Chemie, 4. Auflage, Verlag Chemie, Weinheim (1980), Band 19, Seiten 132 ff. sowie in Encyclopedia of Polymerscience and Engineering, Volume 6, Wiley & Sons, New York 1986, Seiten 1-51, ausführlich beschrieben.

Das wasserunlösliche Polymer B wird durch Monomere erzeugt, die wenigstens zu einem erheblichen Teil in Wasser schwerlöslich sind und auch bei Änderung des pH-Wertes schwerlöslich bleiben. Unter schwerlöslich wird eine Löslichkeit von weniger als 10 Gew.-%, insbesondere weniger als 5 Gew.-%, bei 25 °C verstanden. Der Anteil der schwerlöslichen Monomeren muß wenigstens so groß sein, daß das entstehende Emulsionspolymerisat unter den Polymerisationsbedingungen in der Wasserphase unlöslich ist und in Form dispergierter Teilchen vorliegt. Im Sinne der Erfindung werden vorzugsweise solche Mischungen verwendet, die zu mindestens 70 Gew.-% und insbesondere zu mindestens 90 Gew.-% aus schwerlöslichen Monomeren bestehen.

Geeignete Monomere enthalten mindestens eine ethylenisch ungesättigte Gruppe. Die Begriffe ethylenisch ungesättigt, vinylisch ungesättigt und ,-ungesättigt werden synonym verwendet. Dem Fachmann ist bekannt, daß derartige Monomere sich unter den Bedingungen der Suspensions- oder Emulsionspolymerisation in einem wäßrigen Medium zu Polymeren verbinden lassen. Dazu zählen beispielsweise Vinylverbindungen, Styrole und Acrylate sowie deren Derivate. Zu den geeigneten Vinylverbindungen zählen beispielsweise Vinylchlorid sowie Vinylester wie Vinylacetat, Vinylpropionat, Vinylester der Versaticsäure aber auch Vinylfettsäureester wie Vinyllaurat. Geeignete Styrolverbindungen sind Styrol, Vinyltoluol, α-Methylstyrol, Ethylstyrol, iso-Propylstyrol, tert.-Butylstyrol, 2,4-Dimethylstyrol, Diethylstyrol, o-Methyl-p-iso-propylstyrol, Halogenstyrole wie Chlorstyrol, Fluorstyrol und Jodstyrol, 2,4-Cyanostyrol, Hydroxystyrol, Nitrostyrol, Aminostyrol und/oder Phenylstyrol. Bevorzugt sind insbesondere Styrol, Vinyltoluol und α-Methylstyrol. Als geeignete Acrylate seien beispielhaft Acrylsäure-, Methacrylsäure- und Crotonsäure-Ester genannt, beispielsweise auch Ester die Hydroxyfunktionen enthaften, wie Hydroxyethylacrylat und Hydroxyethylmethacrylat. Bei der Emulsionspolymerisation können selbstverständlich auch Mischungen derartiger ethylenisch ungesättigter Monomere polymerisiert werden, soweit sie sich zur Copolymerisation eignen. Um Dispersionen mit Glasübergangstemperaturen von über 75 °C zu erhalten, wird bevorzugt von Styrol oder Styrolderivaten und/oder Methacrylaten ausgegangen.

Geeignete Initiatoren sind üblicherweise wasserlösliche radikalbildende Verbindungen, beispielsweise Wasserstoffperoxyd, Peressigsäure, Perbenzoesäure sowie Perdisulfate, beispielsweise Kalium- oder Ammoniumperoxodisulfat, Perphosphate, Peroxycarbonate, aber auch Hydroperoxide, wie tert.-Butylhydroperoxid. Geeignete Redoxkatalysatorsysteme sind beispielsweise Natriumpersulfat/Natriumformaldehydsulfoxylat, Cumolhydroperoxid/Natriummetabisulfit, Wasserstoffperoxid/Ascorbinsäure und Schwefeldioxid/Ammoniumpersulfat. Geeignet sind auch Azo-Verbindungen, wie 4,4-Azo-bis(cyanopentansäure) oder 2,2'-Azobis(2-methylbutyronitril). Die Katalysatoren werden in üblichen katalytisch wirksamen Konzentrationen verwendet. Diese liegen im allgemeinen zwischen 0,01 bis 4,0 Gew.-%, bezogen auf die Dispersion. Weiterhin können optional Regler, wie beispielsweise Schwefelverbindungen, zur Kontrolle des Molekulargewichts von Polymer B eingesetzt werden.

In besonderen Ausführungsformen können weitere für die Emulsionspolymerisation übliche Komponenten verwendet werden. Dies sind beispielsweise Beschleuniger, Puffer und beliebige andere Bestandteile, die neben den erfindungsgemäßen Stabilisatoren in der Emulsionspolymerisationsreaktionsmischung verwendet werden können und aus dem Stand der Technik zu Emulsionspolymerisationsverfahren bekannt sind. Dies sind beispielsweise Fe²⁺-Salze, die beispielsweise in Kombination mit Natriumformaldehydsulfoxylaten eine Beschleunigung der Radikalbildung von Radikalstartern bewirken, oder als Puffer wirkende Salze, beispielsweise Phosphate, Carbonate, Citrate, die zur Stabilisierung des pH-Wertes verwendet werden können. Derartige Additive können bis zu 3 Gew.-% in der Dispersion enthalten sein.

Gegenstand der vorliegenden Erfindung ist auch die Verwendung der Polymersysteme in Druckfarben.

Durch den Aufbau der erfindungsgemäßen Polymersysteme gelingt es insbesondere, Polymermischungen mit der für eine Anwendung im Druckbereich erforderlichen hohen Glasübergangstemperatur und hohen Benetzungsfähigkeit für Pigmente zu erhalten.

Gegenstand der Erfindung ist auch die Verwendung der erfindungsgemäßen Polymermischungen als Reibharze und Anreibedispersionen für Pigmentpasten und als Harze und Dispersionen als Hauptbindemittel für Drucklacke und Druckfarben auf Wasserbasis.

Bei der Verwendung der erfindungsgemäßen Polymermischungen als Harze in Wasserlacken dienen die Polymermischungen als Komponenten zur Feineinstellung der wäßrigen Drucklacksystemen, beispielsweise in Glanzharzen für Überdrucklacke zum Bedruken von Papier, Pappe, Kartonagen und dergleichen, beispielsweise mit dem Farbwerk einer Bogen- oder Rollenoffsetmaschine, aus Feuchtwerken, separaten Lakieraggregaten von Bogen- oder Rollenoffset-Druckmaschinen, Bogenlackiermaschienen, Tief- und Flexodruckmaschinen. Bei der Verwendung der erfindungsgemäßen Harzlösungen und Dispersionen als Bindemittelträger für Drucklacke und Druckfarbe beträgt deren Feststoffgehalt im allgemeinen 5 bis 85 Gew.-%. Diese Lacke und Farben enthalten 1 bis 70 Gew.-% erfindungsgemäße Dispersionen und/oder 1 bis 40 Gew.-% erfindungsgemäße Festharze sowie 0 bis 60 Gew.-% Glykole oder Glykolether, 0 bis 30 Gew.-% Netzmittel, 0 bis 35 Gew.-% Neutralisationsmittel (Säuren), 0 bis 30 Gew.-% natürliche und/oder synthetische Wachse, 0 bis 2,5 Gew.-% Entschäumer, 0 bis 80 Gew.-% Wasser und 0 bis 60 Gew.-% Pigmente. Das Pigment/BindemittelVerhältnis bei Anreibeoperationen beträgt zwischen 5:95 und 95:5, bevorzugt 30:70 bis 70:30. Für die Anwendung als Pigmentanreibekomponenten sind auch Festkörpergehalte von größer 30 Gew.-% zweckmäßig. Für den Aufbau dieser Stammfarben, Anreibepasten und Druckfarben sind auch Mischungen verschiedener Typen von Dispersionen oder Harzlösungen zweckmäßig. Zur Einarbeitung von Pigmenten (beispielsweise Titandioxid, Buntpigmente, synthetische Ruße), Füllstoffen (beispielsweise Talkum, Chinaclay, Wachse), Farbstoffen und Verlaufsmitteln in die Lösungen und/oder Dispersionen und/oder deren Mischungen und/oder deren Verdünnungen sind die allgemein üblichen Mahl-, Misch-, Knet- und Anreibegeräte optional in Gegenwart üblicher Dispergierhilfsmittel einsetzbar.

Mit den erfindungsgemäßen Harzen lassen sich Pigmentpasten, Glanzharzlösungen und Dispersionen erzeugen, die ein ausgezeichnetes drucktechnisches Verhalten, eine gute Lagerstabilität, hohen Glanz und Farbstärke sowie eine hervorragende Deinkbarkeit aufweisen.

Die Pigmentpasten können im Prinzip alle für Druckverfahren geeigneten Pigmente enthalten, bevorzugt sind Pigmente mit Polyetherbelegung einzusetzen, und können neben den Pigmenten auch noch übliche Zusätze, beispielsweise Weichmacher, Füllstoffe und Netzmittel enthalten.

Die Herstellung geeigneter, erfindungsgemäß verwendbarer Harze sowie die Herstellung stabiler Polymerdispersionen durch Emulsionspolymerisation sowie deren Verwendung in Druckfarben und Drucklacken wird durch nachfolgende Beispiele erläutert.

Teile und Prozente in den Beispielen beziehen sich, soweit nicht anders angegeben, auf das Gewicht. Alle Reaktionen werden unter Schutzgas (N₂) durchgeführt.

### Beispiel 1: Herstellung eines "styrolisierten" Phenols

Handelsübliches Bisphenol A (228 g) wird mit Oxalsäure-di-Hydrat (2,2 g) und Borsäure (1,2 g) versetzt und auf 120 °C erhitzt. Zu dieser Mischung wird Styrol (104 g) in der Weise dosiert, daß die Temperatur des Reaktionsgemisches ohne weiteres Heizen zwischen 120 °C und 160 °C (maximale Temperatur) gehalten wird. Anschließend wird noch etwa zwei Stunden durch Heizen bei 160 °C gehalten, während der Umsetzungsgrad anhand von Festkörperbestimmung kontrolliert wird.

### Beispiel 2: Herstellung eines "styrolisierten" Phenols

Eine Mischung aus handelsüblichem Bisphenol A (117 g) und Styrol (53 g) wird unter Rühren zuerst auf 90 °C erhitzt und anschließend nach Zugabe von Oxalsäure-di-Hydrat (0,23 g) und Borsäure (0,11 g) auf 120 °C erhitzt. Es wird noch etwa 3 Stunden bei 120 °C gerührt, während der Umsetzungsgrad anhand von Festkörperbestimmung kontrolliert wird.

### Beispiel 3: Herstellung eines "styrolisierten" Phenols

Handelsübliches Bisphenol A (228 g) wird mit Oxalsäure-di-Hydrat (2,2 g) und Borsäure (1,15 g) versetzt und auf 120 °C erhitzt. Zu dieser Mischung werden Styrol (104 g) und ®Veova-10 (Shell Chemie, Versaticsäurevinylester) (198 g) in der Weise dosiert, daß die Temperatur des Reaktionsgemisches ohne weiteres Heizen zwischen 120 °C und 160 °C (maximale Temperatur) gehalten wird.

Anschließend wird noch etwa zwei Stunden durch Heizen bei 160 °C gehalten, während der Umsetzungsgrad anhand von Festkörperbestimmung kontrolliert wird.

### Beispiel 4: Herstellung eines Polymers A

Das Reaktionsprodukt aus Beispiel 1 (181 g), Diethanolamin (19 g), Cyclohexylamin (18 g), Dimethylaminopropylamin (83 g) und Methoxypropanol (225 g) werden gemischt und auf 80°C erhitzt. Dazu wird eine Mischung aus einem Polyglycidylether auf Basis Bisphenol A mit einem Epoxidequivalentgewicht von ca. 180 bis 192 (®Beckopox EP 140, Hoechst 544 g) und einem Polypropylenglykol-Diglycidylether (®Denacol EX-920, Nagase Chemicals) (55,1 g) innerhalb von 30 Minuten dosiert. Die Temperatur steigt auf 130 °C und wird anschließend noch etwa 3 Stunden gehalten. Der Epoxidgehalt beträgt am Ende der Reaktion Null.

| | |
|---|---|
| M_{w}: | 10700 |
| T_{g} (Polymer A): | 72 °C |
| Aminzahl: | 104 |

### Beispiel 5: Herstellung eines Polymers A

Ein handelsübliches Bisphenol A (124 g), Diethanolamin (19 g), Cyclohexylamin (18 g), Dimethylaminopropylamin (83 g) und Methoxypropanol (225 g) werden gemischt und auf 80°C erhitzt. Dazu wird eine Mischung aus einem Polyglycidylether auf Basis Bisphenol A mit einem Epoxidequivalentgewicht von ca. 180 bis 192 (Beckopox EP 140) (544 g) und einem Polypropylenglykol-Diglycidylether (Denacol EX-920) (55,1 g) innerhalb von 30 Minuten dosiert. Die Temperatur steigt auf 130 °C und wird anschließend noch etwa 3 Stunden gehalten. Der Epoxidgehalt beträgt am Ende der Reaktion Null.

| | |
|---|---|
| M_{w}: | 10000 |
| T_{g} (Polymer A): | 70 °C |
| Aminzahl: | 106 |

### Beispiel 6: Herstellung eines Polymers A

Reaktionsprodukt aus Beispiel 1 (207 g), Dodecylamin (115 g), Dimethylaminopropylamin (64 g) und Methoxypropanol (240 g) werden gemischt, auf ca. 100° C erhitzt und dazu ein Polyglycidylether auf Basis Bisphenol A mit einem Epoxidequivalentgewicht von ca. 180 bis 192 (Beckopox EP 140, 575 g) innerhalb von ca. 60 Minuten dosiert. Nach Beenden der Zugabe wird die Temperatur auf 130 °C erhöht, die anschließend noch etwa 3 Stunden gehalten wird. Der Epoxidgehalt beträgt am Ende der Reaktion Null.

| | |
|---|---|
| M_{w}: | 3500 |
| T_{g} (Polymer A): | 54 °C |
| Aminzahl: | 101 |

### Beispiel 7: Herstellung eines Polymers A

Handelsübliches Bisphenol A (158 g), Dodecylamin (129 g), Dimethylaminopropylamin (71 g) und Methoxypropanol (250 g) werden gemischt und auf ca. 100 °C erhitzt. Dazu wird ein Polyglycidylether auf Basis Bisphenol A mit einem Epoxidequivalentgewicht von ca. 180 bis 192 (Beckopox EP 140) (642 g) innerhalb von ca. 60 Minuten dosiert. Nach Beenden der Zugabe wird die Temperatur auf 130 °C erhöht und anschließend noch etwa 3 Stunden gehalten. Der Epoxidgehalt beträgt am Ende der Reaktion Null.

| | |
|---|---|
| M_{w}: | 3500 |
| T_{g} (Polymer A): | 52 °C |
| Aminzahl: | 103 |

### Beispiel 8: Herstellung eines Polymergemisches A

182 g eines handelsüblichen Epoxid-Materials (Beckopox-EP 301) werden aufgeschmolzen und bei 120 °C mit 43 g Diethanolamin umgesetzt. Ca. 60 Minuten später werden weitere 447 g Epoxid-Material (Beckopox EP-301) und anschließend aufeinanderfolgend 53 g Diethanolamin und 26 g Dimethylaminopropylamin hinzugefügt und die Temperatur auf ca. 150 °C erhöht. Es wird noch 2 Stunden bei 150 °C gerührt. Anschließend werden flüchtige Bestandteile im Vakuum abgetrennt. Die Harzschmelze wird entweder direkt isoliert oder mit 1534 g Wasser und 52 g Ameisensäure verdünnt und bei 90 °C zur klaren Lösung gerührt.

### Beispiel 9: Herstellung eines Polymergemisches A (A1 + A2)

10 mol-% der Epoxidgruppen der Epoxidmaterialien des Beispiels 8 werden bei ca. 120 °C mit CO₂ umgesetzt. 10 mol-% des in Beispiel 8 eingesetzten Anteils an Diethanolamin wird durch einen äquimolaren Anteils an Dimethylaminopropylamin ersetzt. Die weitere Verfahrensweise entspricht der in Beispiel 8 beschriebenen.

### Beispiel 10: Polymersystem aus A und B

Durch Erhitzen von 88 g des Harzes aus Beispiel 8 in 197 g Wasser und 17 g Dimethylolpropionsäure auf 90 °C wird eine 35 %ige Harzlösung hergestellt. Durch parallele Dosierung von 176 g Styrol und einer Lösung von 1 g Ammoniumperoxydisulfat in 100 g Wasser zu dieser Lösung wird ein Latex aufgebaut. Nach Zugabe eines Redoxsystems zur Restmonomerentfernung erhält man eine sehr transparente Dispersion mit ca. 48 % Festkörpergehalt, einem pH-Wert von 5,4 und einer Viskosität von 20 mPa·s.

### Beispiel 11: Anreibe-/Glanzpaste

Das Reaktionsprodukt aus Beispiel 6 (150 g) wird auf ca. 80° C erhitzt, mit Wasser (224 g) und Milchsäure (19,7 g) innerhalb von 30 Minuten versetzt und zur weitgehend klaren Lösung gerührt. Man erhält eine Anreibepaste mit einem Festkörpergehalt von ca. 37%, einem pH-Wert von 5,1 und einer Viskosität (nach Ubbelohde) von ca. 320 mPa·s bei 23 °C.
Neutralisationsgrad (Polymer A): 80 %

### Beispiel 12: Anreibe-/Glanzpaste

Das Reaktionsprodukt aus Beispiel 7 (150 g) wird auf ca. 80°C erhitzt, mit Wasser (224 g) und Milchsäure (20,3 g) innerhalb von 30 Minuten versetzt und zur weitgehend klaren Lösung gerührt. Man erhält eine Anreibepaste mit einem Festkörpergehalt von ca. 37%, einem pH-Wert von 5,5 und einer Viskosität (nach Ubbelohde) von ca. 150 mPa·s bei 23 °C.
Neutralisationsgrad (Polymer A): 80%

### Beispiel 13: Polymersystem aus A und B

Das Reaktionsprodukt aus Beispiel 4 (125 g) wird auf ca. 80 °C erhitzt, mit Wasser (137 g) und Ameisensäure (8 g) innerhalb von 30 Minuten versetzt und zur klaren Lösung gerührt. Bei 90 °C wird nun Styrol (200 g) und parallel dazu Ammoniumperoxodisulfat (1 g) in Wasser (292 g) innerhalb von etwa 3 Stunden dosiert. Man erhält so eine Dispersion mit einem Festkörpergehalt von 41,5%, einem pH von etwa 5,5 und einer Viskosität (nach Ubbelohde) von ca. 17 mPa·s bei 23°C.

| | |
|---|---|
| M_{w}: | 450000 |
| T_{g}: | 102 °C |

### Beispiel 14: Polymersystem aus A und B

Das Reaktionsprodukt aus Beispiel 4 (125 g) wird auf ca. 80 °C erhitzt, mit Wasser (161 g) und Dimethylolpropionsäure (24 g) innerhalb von 30 Minuten versetzt und zur klaren Lösung gerührt. Bei 90 °C wird nun Styrol (200 g) und parallel dazu Ammoniumperoxodisulfat (1 g) in Wasser (292 g) innerhalb von etwa 3 Stunden dosiert. Man erhält so eine Dispersion mit einem Festkörpergehalt von ca. 42%, einem pH von etwa 5,8 und einer Viskosität (nach Ubbelohde) von ca. 17 mPa·s bei 23°C.

| | |
|---|---|
| M_{w}: | 430000 |
| T_{g}: | 108 °C |

### Beispiel 15: Herstellung eines Glanzüberdrucklacks

Die Glanzpaste aus Beispiel 11 (30 g) wird mit Dispersion aus Beispiel 13 (65 g) und Butylglykol (2 g) homogen gemischt. Nach Einstellung auf Druckviskosität mit Wasser (Auslaufzeit ca. 16 s im 4 mm DIN-Becher bei 23 °C) erhält man einen Überdrucklack für Hochglanzfilme.

### Beispiel 16 Herstellung eines Glanzüberdrucklacks

Die Dispersion aus Beispiel 10 und das Harz aus Beispiel 8, in Form einer 40 %igen Lösung in Wasser/Dimethylolpropionsäure (Neutralisationsgrad 80%), werden im Anteil von 1:1 bis 2:1 mit ca. 1,5% Butyldiglykol 1 Stunde gut durchmischt. Nach Einstellung auf Druckviskosität mit Wasser erhält man einen Überdrucklack für Hochglanzfilme.

### Beispiel 17: Herstellung einer blauen Pigment-Paste (Stamm-Farbe)

Die Anreibepaste aus Beispiel 11 (55 g) wird mit ®Heliogen Blau D7099AQ (BASF) (32 g) und Wasser (31 g) in einem allgemein üblichen Anreibegerät intensiv vermengt. Man erhält eine Pigment-Paste mit einem Festkörpergehalt von 35% und einer Auslaufzeit von ca. 60 s im 4mm DIN-Becher bei 23 °C.

### Beispiel 18: Herstellung einer blauen Pigment-Paste (Stamm-Farbe)

Die Anreibepaste aus Beispiel 12 (69 g) wird mit Heliogen Blau D7099AQ (30 g) und Wasser (49 g) in einem allgemein üblichen Anreibegerät intensiv vermengt. Man erhält eine Pigment-Paste mit einem Festkörpergehalt von 35% und einer Auslaufzeit von ca. 38 s im 4mm DIN-Becher bei 23 °C.

### Beispiel 19: Herstellung einer pigmentierten Druckfarbe:

Die Pigment-Paste aus Beispiel 17 (11 g) wird mit Dispersion aus Beispiel 13 (30 g) homogen gemischt. Man erhält so eine Druckfarbe mit einem Festkörpergehalt von ca. 34%.

### Beispiel 20: Herstellung einer gelben Pigment-Paste (Stamm-Farbe)

117 Teile des Harzes aus Beispiel 8 (25%ig in Wasser/Dimethylolpropionsäure, Neutralisationsgrad 80%) und 25 Teile ®Paliotol Gelb D 1155 (BASF) werden über 30 Minuten bei Raumtemperatur im Paint-Shaker (Glaskugeln 3-4 mm) angerieben.

### Beispiel 21: Herstellung einer pigmentierten Druckfarbe:

100 Teile Stammfarbe Gelb und 100 Teile Dispersion aus Beispiel 10 werden gemischt, mit Wasser auf 6% Pigmentgehalt eingestellt. Man erhält so eine Druckfarbe mit einer Auslaufzeit von 48-53 s (DIN-Auslaufbecher 3 mm/23 °C).

**Tabelle 1**

| Einfluß des Bindemittels auf das Eigenschaftsprofil von Drucklacken | | | | | | |
|---|---|---|---|---|---|---|
| Glanz-Paste | Pigment Paste | Dispersion | Drucklack | Glanz^{a)} (%) | Wasserfestigkeit^{b)} | Trocknung^{c)} |
| | | | | | | |
| Bsp. 11 | | Bsp. 13 | Bsp. 15 | 85 | 1-2 | 2 |
| Bsp. 11 | | Bsp. 14 | wie Bsp. 15 | 81 | 1-2 | 1-2 |
| Bsp. 12 | | Bsp. 13 | wie Bsp. 15 | 64 | 2 | 2 |
| Bsp. 12 | | Bsp. 14 | wie Bsp. 15 | 72 | 2 | 3 |
| Bsp. 8 | | Bsp. 10 | Bsp. 16 | 79 | 2-3 | 2 |
| | Bsp. 17 | Bsp. 13 | Bsp. 19 | 56 | 1-2 | 2 |
| | Bsp. 17 | Bsp. 13 | wie Bsp. 19 | 61 | 1-2 | 2-3 |
| | Bsp. 18 | Bsp. 13 | wie Bsp. 19 | 55 | 2-3 | 2-3 |
| | Bsp. 18 | Bsp. 14 | wie Bsp. 19 | 42 | 2 | 3 |
| | Bsp. 20 | Bsp. 10 | Bsp. 21 | 60 | 2-3 | 2-3 |

| | | | | | | |
|---|---|---|---|---|---|---|
| a) 12 µm Aufzüge auf gestrichenem Papier (Eigenglanz 32), gemessen mit Reflektometer RL (Dr. Lange) unter einem Winkel von 60° | | | | | | |
| b) 2 s nach Rakelaufzug auf gestrichenem Papier (23 °C) 1: keine Veränderung der Lackoberfläche, nach 1 Minute wischfest 2: leichte Abstumpfung der Lackoberfläche, nach 2 Minuten wischfest 3: Abspülen von Lackoberfläche, nach 5 Minuten wischfest 4: komplette Ablösung des Lackes, nach 10 Minuten wischfest | | | | | | |
| c) 2 x 24 µm Aufzüge, gemessen mit Blocktester ®Synres (Fa. Technoglas, Voorhout, Holland) bei 23 °C 1: trocken und klebfrei nach weniger als 1 Minute 2: trocken und klebfrei nach weniger als 2 Minuten 3: trocken und klebfrei nach weniger als 3 Minuten 4: trocken und klebfrei nach weniger als 4 Minuten | | | | | | |

## Patentansprüche

1. Aminogruppen-haltiges Polymersystem, enthaltend ein Aminogruppenhaltiges Polymer oder Polymergemisch A mit einer Glasübergangstemperatur von mindestens 40 °C, einem mittleren Molekulargewicht (Gewichtsmittel) von 2000-75000 und einer Aminzahl von 50-300, dessen Aminogruppen mindestens zu 35 % neutralisiert sind, herstellbar durch Umsetzung von mindestens jeweils einer Verbindung aus den Gruppen
(a) Epoxide, Carbonate, Epoxid-Carbonate,
(b) Amine und
(c) Phenole
und zumindest Teilneutralisation des erhaltenen Polymers oder Polymergemisches A und Überführung in Wasser, und gegebenfalls ein wasserunlösliches Polymer B, herstellbar durch Polymerisation von ethylenisch ungesättigten Monomeren in Gegenwart des Polymers oder Polymergemisches A.

2. Polymersystem nach Anspruch 1, dadurch gekennzeichnet, daß das Polymer oder Polymergemisch A eine Glasübergangstemperatur von mindestens 70 °C aufweist.

3. Polymersystem nach Anspruch 1, dadurch gekennzeichnet, daß das Polymer oder Polymergemisch A ein mittleres Molekulargewicht (Gewichtsmittel) von 5000-25000 aufweist.

4. Polymersystem nach Anspruch 1, dadurch gekennzeichnet, daß das Polymer oder Polymergemisch A eine Aminzahl von 90-180 aufweist.

5. Polymersystem nach Anspruch 1, dadurch gekennzeichnet, daß das Polymersystem ein Aminogruppen-haltiges Polymergemisch A aus mindestens zwei Aminogruppen-haltigen Polymeren A1 und A2 enthält.

6. Polymersystem nach Anspruch 5, dadurch gekennzeichnet, daß die Aminogruppen-haltigen Polymere A1 und A2 ein unterschiedliches mittleres Molekulargewicht aufweisen.

7. Polymersystem nach Anspruch 5, dadurch gekennzeichnet, daß das Gewichtsverhältnis der Aminogruppen-haltigen Polymere A1 zu den Aminogruppen-haltigen Polymeren A2 95:5 bis 5:95 beträgt.

8. Verfahren zur Herstellung eines Polymersytems nach Anspruch 1 durch Aufbau eines Aminogruppen-haltigen Polymers oder Polymergemisches A in Masse oder in Gegenwart eines organischen Lösungsmittels aus mindestens jeweils einer Verbindung aus den Gruppen
(a) Epoxide, Carbonate oder Epoxid-Carbonate,
(b) Amine und
(c) Phenole,
Neutralisation des erhaltenen Polymers oder Polymergemisches A zu mindestens 35 % und Überführung in Wasser und gegebenenfalls Herstellung eines wasserunlöslichen Polymers B in Gegenwart des Polymers oder Polymergemisches A in wäßriger Phase durch Emulsions- oder Suspensionspolymerisation.

9. Verfahren nach Anspruch 8, dadurch gekennzeichnet, daß das Polymergemisch durch Herstellung mindestens eines Aminogruppen-haltigen Polymers A2 in Gegenwart mindestens eines Aminogruppen-haltigen Polymers A1 hergestellt wird.

10. Verwendung des Polymersystems nach Anspruch 1 als Reibharz oder Anreibdispersion für Pigmentpasten.

11. Verwendung des Polymersystems nach Anspruch 1 als Harz oder Dispersions in Wasserlacken und Druckfarben.
